# EUROPEAN PATENT SPECIFICATION

(11) **EP 0 590 506 B1**
(45) Date of publication and mention of the grant of the patent: **22.12.1999**
(21) Application number: 93115305.0
(22) Date of filing: 23.09.1993
(51) Int. Cl.: G01N 1/28

(54) **Apparatus for depositing and staining cytological material on a microscope slide**
Vorrichtung zum Ablegen von zytologischen Proben auf einem Objektträger und zum Anfärben derselben
Dispositif pour la déposition et la coloration d'échantillons cytologiques sur une lamelle porte-objets

(30) Priority: 29.09.1992 US 953037; 30.08.1993 US 112002
(43) Date of publication of application: 06.04.1994
(73) Proprietor: AUTOCYTE, Inc., Elon College, North Carolina 27244 (US)
(72) Inventor: Carrico, Charles Leo, Burlington, North Carolina 27215 (US); Fox, William Alan, Burlington, North Carolina 27215 (US); Knesel, jr., Ernest Arthur, Greensboro North Carolina 27408 (US)
(74) Representative: Horner, Martin Grenville

(56) References cited:
- EP-A- 0 201 780
- DE-U- 9 104 438
- US-A- 4 688 513
- MEDIZINTECHNIK vol. 28, no. 3 , 1988 , ZüRICH CH pages 86 - 87 LEHMITZ 'Vorrichtung zur spontanen Sedimentation von Zellen des Liquor cerebrospinalis auf Objektträger'

## Description

The invention relates to an apparatus for depositing and staining cytological material on a microscope slide.

The invention also relates to a method for depositing cytological material on a microscope slide.

Standard cell preparations for cytological evaluation have, in the past, been produced by spreading or smearing a swab collection of cells across a microscope slide surface and allowing the cells to dry. This procedure often produces a preparation that contains unreadable areas of cells due to contaminates, distorted morphology, folding of the cells, and the overlapping of the cells.

Other methods of depositing cell onto microscope slides include centrifugation of cells onto slide, and hematology smearing.

An attempt to overcome the above described difficulties was made with the apparatus described in U.S. Patent No. 4,688,513 to Eberle. In general, Eberle teaches a centrifugal chamber for coating slides with a sedimentation product. The apparatus includes a cylindrical sample chamber with a microscope slide abutting one end of the sample chamber. The microscope slide is mounted on a flat surface of a carrier plate which carrier plate is removably connected with the chamber-microscope slide assembly. The mechanism for locking the chamber to the carrier plate is a linearly-displaceable locking slide which is permanently attached to the carrier plate. Alternately, the chamber can be connected to the carrier plate via rotatable disk-like locking mechanism which also is permanently attached to the carrier plate. The sample fluid containing the cells to be analyzed is placed in the chamber and the apparatus then is placed in a centrifuge. After centrifuging, the supernatant is removed and then the cylindrical chamber is removed from the assembly. The microscope slide, with the centrifuged cells adhered thereto, is removed and the cells then are stained using conventional methodology.

A main disadvantage of the Eberle apparatus is that it produces cell collections containing overlapping cells, cells which have folded over onto themselves during centrifugation, and cells having a distorted morphology as a result of the centrifugal force.

Another disadvantage of the Eberle device is that the slides must be removed from the assembly in order for the cells to be stained using standard staining methods. With standard Pap-staining techniques, a plurality of the prepared slides containing the cell collections are all immersed into a vessel containing the stain solution. Because slides from different patients are proximate to each other in the stain solution, there is a risk that cells from one patient's slide may become dislodged, and float over to and adhere to a different patient's slide. Such "floaters" can generate false-positive results if they adhere to a slide containing only normal cells. To overcome the obvious disadvantages of such a procedure, it is important to ensure that the cell collections are isolated from other specimen slides.

In general terms, therefore, the aim of the invention is to provide an apparatus and a method which make possible to deposit and stain cytological material on a microscope slide ensuring that the deposited cell collection is isolated from cell collections deposited on other specimen slides.

According to a first aspect of the present invention, there is provided an apparatus for use in depositing and staining cytological material on a microscope slide, which comprises:
a) a tube assembly including
   1) an elongated hollow tube having a top end and a bottom end;
   2) a base member located at the bottom end of the tube and projecting outwardly from the tube in a direction generally perpendicular to the longitudinal axis of the tube;
   3) a flange outwardly-extending from the base member in an direction generally perpendicular to the longitudinal axis of the tube; and
b) a base plate having a recessed area defined on all sides by the base plate and configured to receive the microscope slide and to prevent side-to-side and end-to-end movement of said microscope slide, a slot configured for receiving the flange, and a passage which extends from the slot configured for releasably securing the flange to the base plate when the tube assembly is rotated.

A preferred embodiment of the apparatus according to the invention comprises an elongated hollow tube having a top end and a bottom end, a disk-shaped base member located at the bottom end of the tube and projecting outwardly from the tube in a direction generally perpendicular to the longitudinal axis of the tube, first and second flanges outwardly-extending from the base member in a direction generally perpendicular to the longitudinal axis of the tube, each flange having a terminal end, first and second guide flanges, and a base plate. The first guide flange is positioned on the first flange at a point distal to the longitudinal axis of the tube. The second guide flange is positioned on the second flange at a point distal to the longitudinal axis of the tube. The first and second guide flanges are disposed in a direction generally perpendicular to the first and second flanges, respectively. The base plate has a recessed area configured to receive the microscope slide. First and second slots extend outwardly from the recessed area. The first slot is for receiving the first flange and the second slot is for receiving the second flange. First and second passages extend from the first and second slots, respectively, along a plane generally parallel to the recessed area. The first and second passages receive and releasably secure the first and second flanges, respectively, when the tube is rotated.

According to a second aspect of the present invention there is provided;
a) providing an apparatus having
   1) a tube assembly including
      i) an elongated hollow tube having a top end and a bottom end;
      ii) a base member located at the bottom end of the tube and projecting outwardly from the tube in a direction generally perpendicular to the longitudinal axis of the tube;
      iii) a flange outwardly-extending from the base member
      in an direction generally perpendicular to the longitudinal axis of the tube; and
   2) a base plate having a recessed area defined on all sides by the base plate and configured to receive the microscope slide and to prevent side-to-side and end-to-end movement of said microscope slide, a slot for receiving the flange, and a passage which extends from the slot for releasably securing the flange when the tube assembly is rotated;
b) inserting the microscope slide into the recessed area in the base plate;
c) contacting the tube assembly with the microscope slide;
d) rotating the tube assembly so that the flange enters the passage which extends from the slot to releasably secure the flange; and
e) introducing a suspension of the cytological material into the elongated hollow tube so that the cytological material is deposited on the microscope slide.

The invention is described hereinafter in terms of its preferred embodiments and with reference to the accompanying drawings in which:

Figure 1 is an exploded view of an embodiment of the elongated hollow tube, microscope slide, and base plate assembly of the invention.

Figure 2 is a perspective view of an embodiment of the invention when fully assembled.

Figure 3 is a partial cross-sectional view of the elongated hollow tube and O-ring assembly.

Figure 4 is a perspective view of a microscope slide having an area of cells deposited thereon, after removal of the elongated hollow tube.

Figure 5 is a perspective view of an automated cytological system for processing trays having multiple base plates.

Figure 6 is a top plan view of a tray having multiple base plates arranged in base plate units.

Figure 7 is an exploded view of a portion of the tray showing attachment of multiple base plate units.

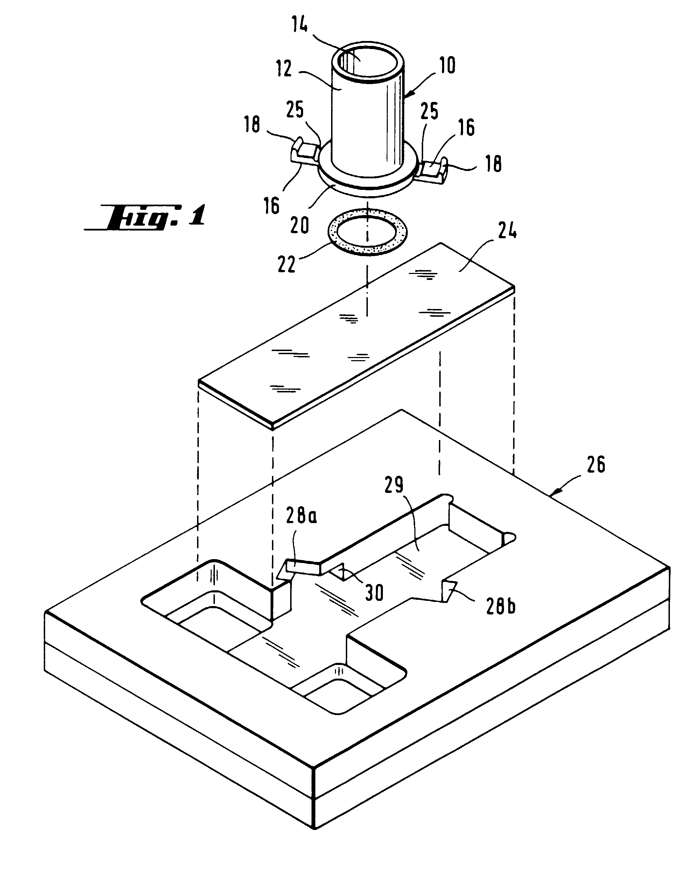

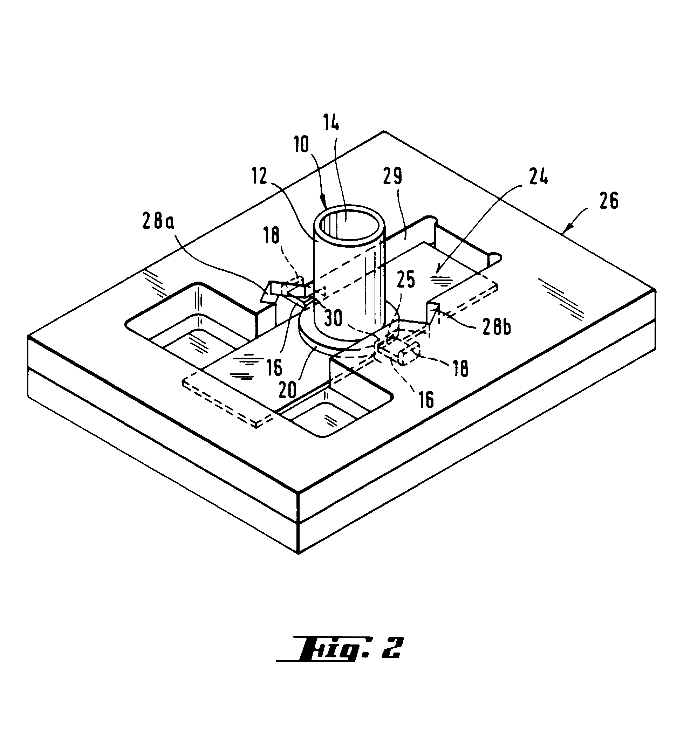

The invention is directed to an apparatus for depositing and staining cytological material on a microscope slide and Figures 1 and 2 depict a preferred embodiment. Reference numeral 12 indicates a side wall of elongated hollow tube 10. Although tube 10 is depicted as a cylinder, other suitable hollow geometric shapes are suitable, such as, a triangular prism, quadrilateral prism, fustrum, etc. The term "tube" is to include all suitable hollow geometric shapes. Side wall 12 defines an inner chamber 14. The exact inner diameter of tube 10 is not critical to the invention. As used herein, the term "diameter" refers to the greatest cross-sectional distance across tube 10. It is important that the inner diameter of tube 10 if less than the width of the microscope slide onto which it is to be placed.

Tube 10 also includes, in a preferred embodiment, a pair of outwardly-extending connector flanges 16 integrally formed with base member 20 which is disposed at the bottom end of side wall 12. Alternatively, flanges 16 could have a separate manufacture and be coupled to tube 10. Preferably, base member 20 is disk-shaped as shown in the Figures. However, it may be of any suitable shape. One or more connector flanges 16 may be used. Base member 20 assists in providing structural support to tube 10 and flanges 16, and provides space for annular groove group 23. Base member 20 itself is not necessary, but is preferred, and may have identity with flange 16. Thus, flange 16 may serve as a flange and base member. As shown in Figure 1, base member 20 has a diameter greater than the diameter of side wall 12, depicted in a cylindrical configuration. For convenience, the combination of tube 10, base member 20 and connector flanges 16 is at times referred to as the tube assembly.

Figure 1 also shows outwardly-extending connector flanges 16 each provided with a guide flange 18 preferably positioned at the terminal end of flange 16. One skilled in the art would recognize the guide flange 18 could be positioned at any point along flange 16. Since guide flange 18 typically moves in a rotary direction with respect to the longitudinal axis of tube 10, it is preferred that the guide flange is arcuate in shape to facilitate rotation. Although guide flange 18 may be placed at any angle other than 0°, 180° or 360° each guide flange 18 is preferably disposed in a direction generally perpendicular to connector flange 16, thus forming a shape resembling the letter "L". The term "angle" is to include any deviation from the plane defined by a plane parallel to the surface of the microscope slide.

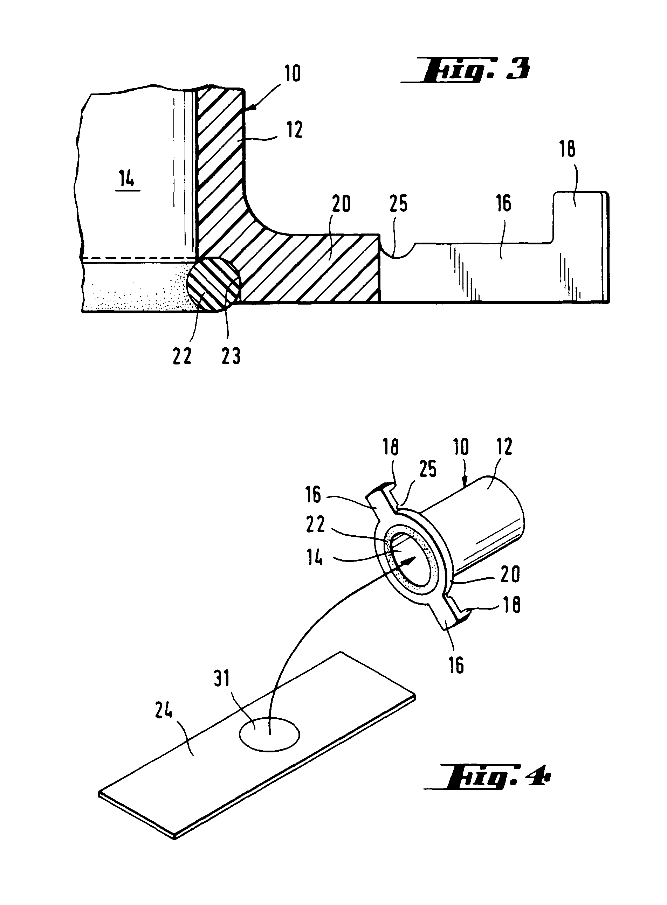

Figure 1 shows sealing member 22, which in a preferred embodiment, is an O-ring or similar device, disposed at the bottom end of tube 10, where tube 10 abuts the surface of microscope slide 24. The term "O-ring" is to include any releasable sealing means. As shown in Figure 3, annular groove 23, defined by side wall 12 and base member 20, is provided for removably and securely receiving O-ring 22. O-ring 22 may be formed of any suitably elastic material, such as a plastic, rubber or resin. To aid in assembly, O-ring 22 may be of a color different than base member 20.

Base plate 26, as shown in Figure 1, comprises recessed area 29 which receives and confines microscope slide 24. Recessed area 29 is configured and dimensioned to conform to the shape of a microscope slide so that when a slide is placed on the flat surface in recessed area 29, it is prevented from substantial side-to-side or end-to-end movement. Cell deposition and staining on a series of slides is facilitated by having cell collections located in approximately the same location on the slides, thus promoting use of automated slide analysis equipment. Base plate 26 also includes slots 28a and 28b which extend outwardly from recessed area 29. Slots 28a, 28b receive outwardly-extending connector flanges 16. Formed within each slot 28a, 28b is passage 30 which is preferably formed generally parallel to the flat surface of recessed area 29. Each slot 28a, 28b and passage 30 is configured and dimensioned to releasably receive and securely hold connector flange 16 and guide flange 18, when tube 10 is rotated.

Tube 10 may be manufactured from any suitable material, the choice of suitable material being readily determined by one skilled in the art. However, it is preferred that tube 10 is manufactured from a plastic, such as polyethylene. Base 26 may be made of any rigid, durable material. However, it is preferred that base plate 26 is formed of aluminum or steel.

Figure 3 is a partial cross-sectional view of elongated tube 10, showing side wall 12 of tube 10, base member 20, connector flange 16, and guide flange 18. Also depicted is annular groove 23 which receives and securely holds O-ring 22 in place. In a preferred embodiment, notch 25 is present in connector flange 16 to provide added flexibility to connector flange 16.

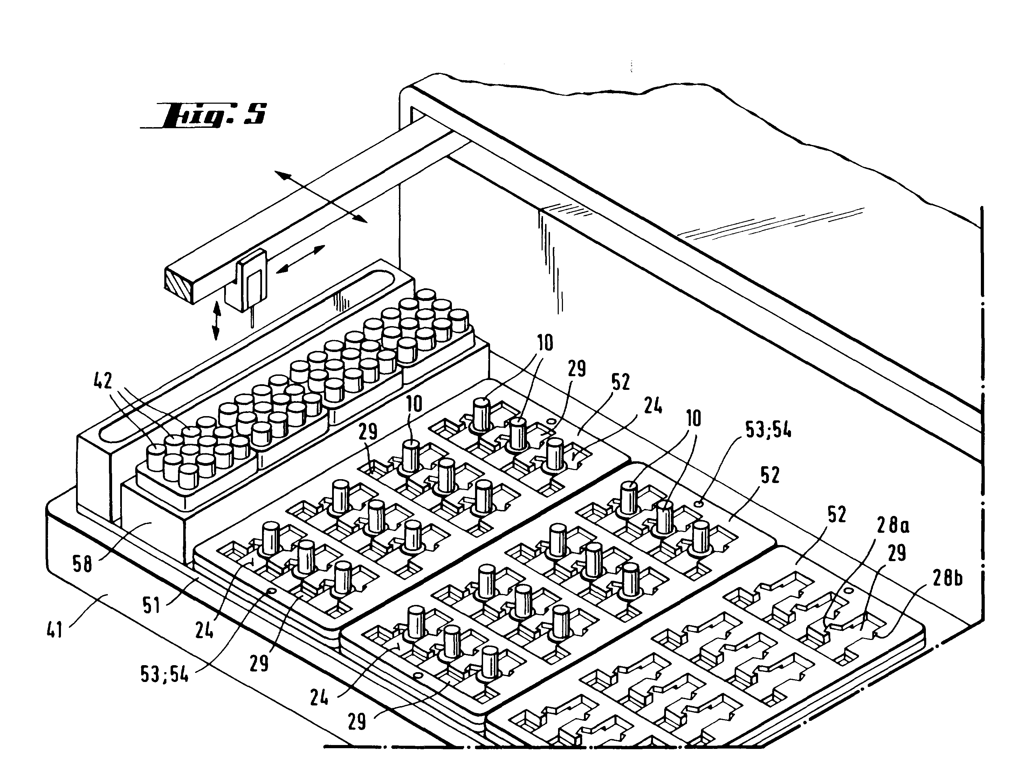

Figure 4 shows microscope slide 24 having a cell deposit 31 thereon, after removal of tube 10.

The subject apparatus is suited for use on an automated cytological specimen analyzer system, since the configuration of base plate 26 makes it suitable for multiple arrangement. As such, it is an aspect of the invention to provide a plurality of the apparatuses of the invention, interconnected in a series, as part of an automated operation. Thus, depositing of cytological material and subsequent staining may be performed automatically on a large number of samples without the need for human intervention.

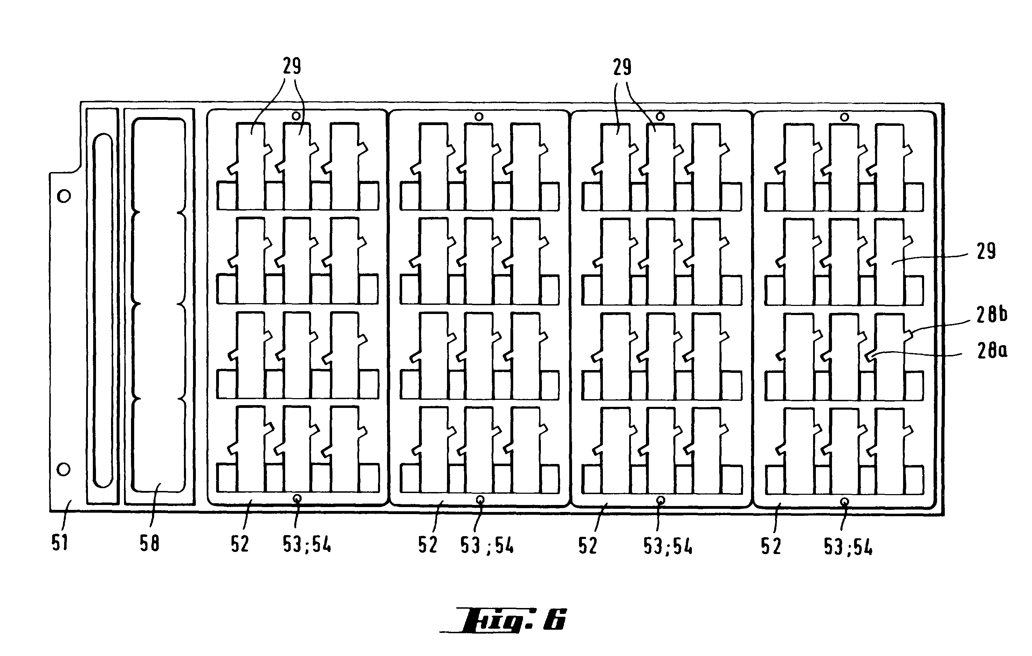

Figure 5 depicts an automated cytological specimen analyzer system 41 comprising a tray 51 carrying a plurality of base plate units 52 each of these units comprising a plurality of base plates 26. As shown in Fig. 5 system 41 further comprises a space apt to receive racks carrying sample tubes 42.

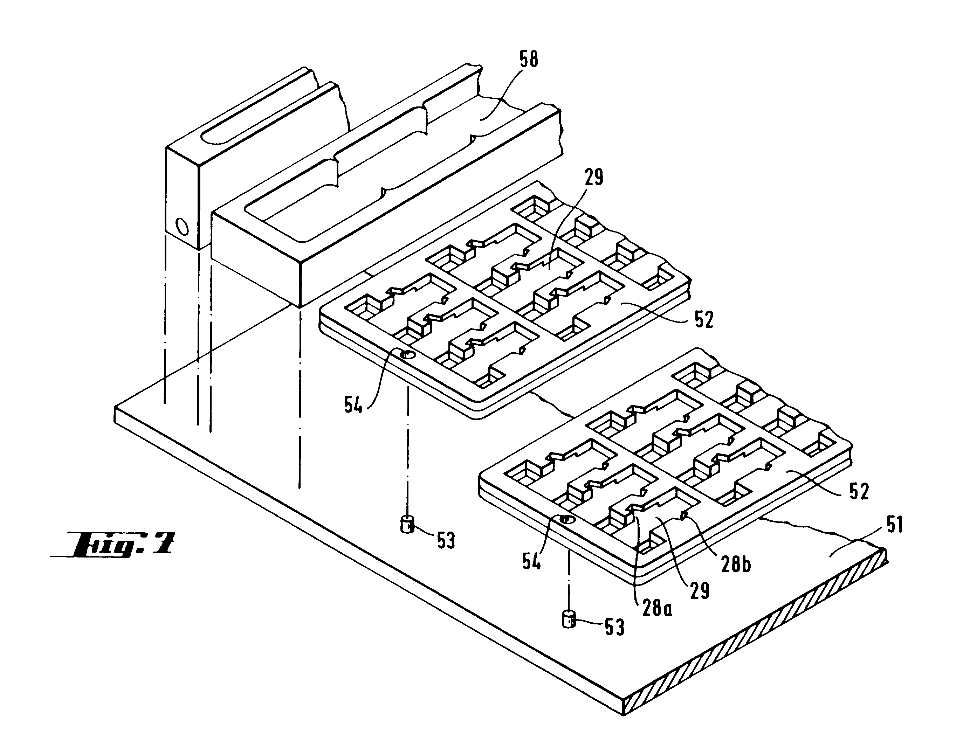

Figure 6 shows a tray 51 having four base plate units 52 each having twelve base plates 26. By using tray 51 in the configuration shown, 48 microscope slides 24 can be fed into an automatic cytological specimen analyzer system 41 at one time.

Figure 7 shows an exploded view of a portion of tray 51 illustrating how base plate units 52 are coupled to tray 51 by means of protrusions 53 which engage corresponding holes 54 in base plate unit 52. As shown in Fig. 7 tray 51 carries a chamber 58 apt to receive racks carrying sample tubes.

As apparent, tray 51 may be manufactured to hold any number of base plate units 52. Alternatively, tray 51 may be configured directly with a plurality of base plates 26 which can be handled by an automatic cytological specimen analyzer system, such is that depicted in Figure 5.

Having described the structure of each components, a description of how to use the apparatus follows. Figures 1 and 2 show the interrelation between the components of the subject apparatus. Microscope slide 24 is placed onto the flat surface of recessed area 29 of base plate 26. Elongated hollow tube 10 then is placed on the surface of slide 24 so that O-ring 22 abuts the slide surface. Outwardly-extending connector flanges 16 fit into slots 28a, 28b of base plate 26. Once in this position, tube 10 is forced downward to compress O-ring 22 against slide 24, and then rotated so that connector flanges 16 and guide flanges 18 are received and held in place by passage 30. The downward force exerted by tube 10 on microscope slide 24 via O-ring 22 should be sufficient to securely hold the slide in place in recessed area 29 during the depositing and staining of the cytological material on the slide surface.

Cytological material to be analyzed is typically received from the doctor's clinic in a sample vial. Cells may be taken directly from this sample vial and inserted into the chamber 14, or may be processed further. For example, cell clumps may be disaggregated, and the sample centrifuged over a density gradient, etc., prior to transfer to the apparatus of the invention.

When using the subject apparatus, a technician places a predetermined amount of sample cell suspension into chamber 14. Cells may be settled onto the slide under the naturally concurring gravitational force or by centrifugal force. Preferably, slide 24 has been coated with a cationic material, such as Poly-L lysine. The ionic attraction between the negatively-charged cells and the positively-charged slide surface provides the adhesive force needed to keep the cells in place during subsequent processing. O-ring 22 prevents leakage of liquid at the interface of the slide surface and the bottom end of tube 10. After the cells settle onto the slide, supernatant is removed, typically by aspiration. The removed supernatant includes excess cells which did not adhere to the slide. Cells collected on the slide may then treated in a conventional manner.

The subject apparatus permits cells to be stained using standard staining methods while tube 10 still in place on the slide, thus preventing undesirable "floater" cells from possibly causing interslide contamination. After staining, tube 10 is rotated in the direction reverse to that necessary to lock it to base plate 22. Tube 10 is then removed, leaving the microscope slide in the base plate 22. The slide is then ready for either manual or automated analysis. Alternatively, the slide could be analyzed with the tube assembly in place.

It is understood that other variations on the above-described invention may be made by one skilled in the art without departing from the scope of the invention. The scope of the invention is only to be limited by the claims which follow and their equivalents.

## Claims

1. An apparatus for use in depositing and staining cytological material on a microscope slide, which comprises:
a) a tube assembly (10, 20, 16) including
1) an elongated hollow tube (10) having a top end and a bottom end;
2) a base member (20) located at the bottom end of the tube (10) and projecting outwardly from the tube (10) in a direction generally perpendicular to the longitudinal axis of the tube (10);
3) a flange (16) outwardly-extending from the base member (20) in an direction generally perpendicular to the longitudinal axis of the tube (10); and
b) a base plate (26) having a recessed area (29) defined on all sides by the base plate (26) and configured to receive the microscope slide (24) and to prevent side-to-side and end-to-end movement of said microscope slide (24), a slot (28a,28b) configured for receiving the flange (16), and a passage (30) which extends from the slot (28a,28b) configured for releasably securing the flange (16) to the base plate (26) when the tube assembly (10, 20, 16) is rotated.

2. The apparatus of claim 1, wherein the flange (16) further comprises a guide positioned at an angle to the flange (16).

3. The apparatus of claim 1 or 2 having a plurality of flanges (16) outwardly extending from the base member (20) in a direction generally perpendicular to the longitudinal axis of the tube (10).

4. The apparatus of claim 3 wherein each flange (16) has a terminal end.

5. The apparatus of claim 4, wherein two diametrically opposed flanges (16) extend from the base member (20).

6. The apparatus of claim 5 wherein the two diametrically opposed flanges (16) are provided with guides (18) which are disposed in a direction generally perpendicular to the flanges and which are located at points distal to the longitudinal axis of the tube (10).

7. The apparatus of claim 6 wherein the base plate (26) has first and second slots (28a, 28b) extending outwardly from the recessed area (29), the first slot (28a) for receiving the first flange (16) and the second slot (28b) for receiving the second flange (16), and first and second passages which extend from the first and second slots (28a, 28b), respectively, along a plane generally parallel to the recessed area (29) for receiving and releasably securing the first and second flanges (16), respectively, when the tube (10) is rotated.

8. The apparatus of any preceding claim, wherein the tube (10) is cylindrical.

9. The apparatus of any preceding claim wherein the base member (20) and the flange (16) are integrally formed.

10. The apparatus of any preceding claim further comprising sealing means for releasably securing the tube assembly (10, 20, 16) to the slide (24).

11. The apparatus of claim 10, wherein the sealing means comprise an O-ring.

12. A method of depositing cytological material on a microscope slide, which comprises:
a) providing an apparatus having
1) a tube assembly (10,20,16) including
i) an elongated hollow tube (10) having a top end and a bottom end;
ii) a base member (20) located at the bottom end of the tube (10) and projecting outwardly from the tube (10) in a direction generally perpendicular to the longitudinal axis of the tube (10);
iii) a flange (16) outwardly-extending from the base member (20) in a direction generally perpendicular to the longitudinal axis of the tube (10);
2) a base plate (26) having a recessed area (29) defined on all sides by the base plate (26) and configured to receive the microscope slide (24) and to prevent side-to-side and end-to-end movement of said microscope slide (24), a slot for receiving the flange (16), and a passage which extends from the slot for releasably securing the flange (16) when the tube assembly (10,20,16) is rotated;
b) inserting the microscope slide (24) into the recessed area (29) in the base plate (26);
c) contacting the tube assembly (10,20,16) with the microscope slide (24);
d) rotating the tube assembly (10,20,16) so that the flange (16) enters the passage which extends from the slot to releasably secure the flange (16); and
e) introducing a suspension of the cytological material into the elongated hollow tube (10) so that the cytological material is deposited on the microscope slide (24).

13. The method of claim 12 which further comprises the step of staining the cytological material deposited on the microscope slide (24).

14. The method of claim 12 or 13 which further comprises the step of coating the microscope slide (24) with a cationic material so that the ionic attraction between the negatively charged cells and positively charged slide (24) surface provides the adhesive face needed to keep the cells in place.

## Patentansprüche

1. Vorrichtung zur Verwendung beim Ablagern und Färben von zytologischem Material auf einem Objektträger, mit:
a) einer Rohrbaugruppe (10, 20, 16) mit
1) einem länglichen Hohlrohr (10) mit einem oberen Ende und einem unteren Ende;
2) einem Grundteil (20), das am unteren Ende des Rohrs (10) angeordnet ist und von dem Rohr (10) in eine Richtung allgemein senkrecht zur Längsachse des Rohrs (10) nach außen vorragt;
3) einem Flansch (16), der sich von dem Grundteil (20) in eine Richtung allgemein senkrecht zur Längsachse des Rohrs (10) nach außen erstreckt; und
b) einer Grundplatte (26) mit einem ausgesparten Bereich (29), der auf allen Seiten von der Grundplatte (26) begrenzt ist und zur Aufnahme des Objektträgers (24) und zum Verhindern einer Quer- und einer Längsbewegung des Objektträgers (24) ausgebildet ist, einem Schlitz (28a, 28b), der zur Aufnahme des Flansches (16) ausgebildet ist, und einem Kanal (30), der von dem Schlitz (28a, 28b) aus verläuft und zum lösbaren Befestigen des Flansches (16) an der Grundplatte (26), wenn die Rohrbaugruppe (10, 20, 16) gedreht ist, ausgebildet ist.

2. Vorrichtung nach Anspruch 1, bei der der Flansch (16) ferner eine Führung aufweist, die unter einem Winkel zum Flansch (16) angeordnet ist.

3. Vorrichtung nach Anspruch 1 oder 2, mit einer Mehrzahl von Flanschen (16), die sich vom Grundteil (20) in eine Richtung allgemein senkrecht zur Längsachse des Rohrs (10) nach außen erstrecken.

4. Vorrichtung nach Anspruch 3, bei der jeder Flansch (16) ein Kopfende aufweist.

5. Vorrichtung nach Anspruch 4, bei der zwei einander diametral gegenüberliegende Flansche (16) sich vom Grundteil (20) aus erstrecken.

6. Vorrichtung nach Anspruch 5, bei der die zwei einander diametral gegenüberliegenden Flansche (16) mit Führungen (18) versehen sind, die in einer Richtung allgemein senkrecht zu den Flanschen angeordnet sind und die an zur Längsachse des Rohrs (10) distalen Stellen positioniert sind.

7. Vorrichtung nach Anspruch 6, bei der die Grundplatte (26) erste und zweite Schlitze (28a, 28b), die von dem ausgesparten Bereich (29) nach außen verlaufen, wobei der erste Schlitz (28a) zur Aufnahme des ersten Flansches (16) und der zweite Schlitz (28b) zur Aufnahme des zweiten Flansches (16) vorgesehen sind, und erste und zweite Kanäle aufweist, die von dem ersten bzw. dem zweiten Schlitz (28a, 28b) aus längs einer zum ausgesparten Bereich (29) allgemein parallelen Ebene verlaufen, um den ersten bzw. den zweiten Flansch (16) aufzunehmen und lösbar zu befestigen, wenn das Rohr (10) gedreht ist.

8. Vorrichtung nach einem der vorhergehenden Ansprüche, bei der das Rohr (10) zylindrisch ist.

9. Vorrichtung nach einem der vorhergehenden Ansprüche, bei der das Grundteil (20) und der Flansch (16) einstückig ausgebildet sind.

10. Vorrichtung nach einem der vorhergehenden Ansprüche, ferner mit Dichtungsmitteln zum lösbaren Befestigen der Rohrbaugruppe (10, 20, 16) an dem Objektträger (24).

11. Vorrichtung nach Anspruch 10, bei der die Dichtungsmittel einen O-Ring aufweisen.

12. Verfahren zum Ablagern von zytologischem Material auf einem Objektträger, mit:
a) Bereitstellen einer Vorrichtung mit
1) einer Rohrbaugruppe (10, 20, 16) mit
i) einem länglichen Hohlrohr (10) mit einem oberen Ende und einem unteren Ende;
ii) einem Grundteil (20), das am unteren Ende des Rohrs (10) angeordnet ist und von dem Rohr (10) in eine Richtung allgemein senkrecht zur Längsachse des Rohrs (10) nach außen vorragt;
iii) einem Flansch (16), der sich von dem Grundteil (20) in eine Richtung allgemein senkrecht zur Längsachse des Rohrs (10) nach außen erstreckt;
2) einer Grundplatte (26) mit einem ausgesparten Bereich (29), der auf allen Seiten von der Grundplatte (26) begrenzt ist und zur Aufnahme des Objektträgers (24) und zum Verhindern einer Quer- und einer Längsbewegung des Objektträgers (24) ausgebildet ist, einem Schlitz zur Aufnahme des Flansches (16) und einem Kanal, der von dem Schlitz aus verläuft zur lösbaren Befestigung des Flansches (16), wenn die Rohrbaugruppe (10, 20, 16) gedreht wird;
b) Einsetzen des Objekträgers (24) in den ausgesparten Bereich (29) in der Grundplatte (26);
c) Inkontaktbringen der Rohrbaugruppe (10, 20, 16) mit dem Objektträger (24);
d) Drehen der Rohrbaugruppe (10, 20, 16), so daß der Flansch (16) in den Kanal eintritt, der von dem Schlitz aus verläuft, um den Flansch (16) lösbar zu befestigen; und
e) Zuführen einer Suspension des zytologischen Materials in das längliche Hohlrohr (10), so daß das zytologische Material auf dem Objektträger (24) abgelagert wird.

13. Verfahren nach Anspruch 12, ferner mit dem Schritt des Färbens des auf dem Objektträger (24) abgelagerten zytologischen Materials.

14. Verfahren nach Anspruch 12 oder 13, ferner mit dem Schritt des Beschichtens des Objektträgers (24) mit einem kationischen Material, so daß die Ionenanziehung zwischen den negativ geladenen Zellen und der positiv geladenen Oberfläche des Objektträgers (24) die Haftfläche ausbildet, die zum Halten der Zellen in ihrer Lage notwendig ist.

## Revendications

1. Dispositif utile pour le dépôt et la coloration d'un échantillon cytologique sur une lamelle de microscope, qui comprend :
(a) un assemblage de tubes (10, 20, 16) comprenant :
1) un tube creux allongé (10) ayant une extrémité supérieure et une extrémité inférieure ;
2) un élément de base (20) situé à l'extrémité inférieure du tube (10) et se prolongeant vers l'extérieur à partir du tube (10) dans une direction qui est généralement perpendiculaire à l'axe longitudinal du tube (10) ;
3) une saillie (16) se prolongeant vers l'extérieur à partir de l'élément de base (20) dans une direction qui est généralement perpendiculaire à l'axe longitudinal du tube (10) ; et
(b) une plaque de base (26) présentant une région en creux (29) définie sur tous les côtés par la plaque de base (26) et offrant une configuration convenable pour recevoir la lamelle de microscope (24) et pour empêcher un mouvement d'un côté à l'autre et d'une extrémité à l'autre de ladite lamelle de microscope (24), une fente (28a, 28b) configurée de façon à recevoir la saillie (16), et un passage (30) qui se prolonge depuis la fente (28a, 28b) configuré pour fixer de façon détachable la saillie (16) à la plaque de base (26) lorsque l'assemblage de tubes (10, 20, 16) est soumis à un mouvement de rotation.

2. Dispositif suivant la revendication 1, dans lequel la saillie (16) comprend de plus un guide disposé selon un certain angle par rapport à la saillie (16).

3. Dispositif suivant les revendications 1 ou 2, ayant une pluralité de saillies (16) se prolongeant vers l'extérieur à partir de l'élément de base (20) dans une direction qui est généralement perpendiculaire à l'axe longitudinal du tube (10).

4. Dispositif suivant la revendication 3, dans lequel chaque saillie (16) comprend une extrémité terminale.

5. Dispositif suivant la revendication 4, dans lequel deux saillies (16) diamétriquement opposées se prolongent à partir de l'élément de base (20).

6. Dispositif suivant la revendication 5, dans lequel les deux saillies (16) diamétralement opposées sont pourvues de guides (18) qui sont disposés dans une direction qui est généralement perpendiculaire aux saillies et qui sont situés à des points distaux de l'axe longitudinal du tube (10).

7. Dispositif suivant la revendication 6, dans lequel la plaque de base (26) a une première fente et une seconde fente (28a, 28b) se prolongeant vers l'extérieur à partir de la région en creux (29), la première fente (28a) pour recevoir la première saillie (16) et la seconde fente (28b) pour recevoir la seconde saillie (16), et des premier et second passages qui se prolongent à partir des première et seconde fentes (28a, 28b), respectivement, le long d'un plan généralement parallèle à la région en creux (29) pour recevoir et fixer de façon détachable les première et seconde saillies (16), respectivement, lorsque le tube (10) est soumis à un mouvement de rotation.

8. Dispositif suivant l'une quelconque des revendications précédentes, dans lequel le tube (10) est cylindrique.

9. Dispositif suivant l'une quelconque des revendications précédentes, dans lequel l'élément de base (20) et la saillie (16) forment un élément unique.

10. Dispositif suivant l'une quelconque des revendications précédentes, comprenant de plus un moyen de fermeture étanche pour fixer de façon détachable l'assemblage de tubes (10, 20, 16) à la lamelle (24).

11. Dispositif suivant la revendication 10, dans lequel le moyen de fermeture étanche est un joint torique.

12. Procédé pour déposer un échantillon cytologique sur une lamelle de microscope, qui comprend :
(a) la fourniture d'un dispositif ayant
1) un assemblage de tubes (10, 20, 16) comprenant :
i) un tube creux allongé (10) ayant une extrémité supérieure et une extrémité inférieure ;
ii) un élément de base (20) situé à l'extrémité inférieure du tube (10) et se prolongeant vers l'extérieur à partir du tube (10) dans une direction qui est généralement perpendiculaire à l'axe longitudinal du tube (10) ;
iii) une saillie (16) se prolongeant vers l'extérieur à partir de l'élément de base (20) dans une direction qui est généralement perpendiculaire à l'axe longitudinal du tube (10) ;
2) une plaque de base (26) présentant une région en creux (29) définie sur tous les côtés par la plaque de base (26) et offrant une configuration convenable pour recevoir la lamelle de microscope (24) et pour empêcher un mouvement d'un côté à l'autre et d'une extrémité à l'autre de ladite lamelle de microscope (24), une fente pour recevoir la saillie (16), et un passage qui se prolonge depuis la fente de façon à fixer de façon détachable la saillie (16) lorsque l'assemblage de tubes (10, 20, 16) est soumis à un mouvement de rotation ;
b) l'insertion de la lamelle de microscope (24) dans la région en creux (29) dans la plaque de base (26) ;
c) la mise en contact de l'assemblage de tubes (10, 20,16) avec la lamelle de microscope (24) ;
d) la soumission à un mouvement de rotation de l'assemblage de tubes (10, 20, 16) de telle sorte que la saillie (16) pénètre dans le passage qui se prolonge à partir de la fente pour fixer de façon détachable la saillie (16) ; et
e) l'introduction d'une suspension de l'échantillon cytologique dans le tube creux allongé (10) de telle sorte que l'échantillon cytologique est déposé sur la lamelle de microscope (24).

13. Procédé suivant la revendication 12, qui comprend de plus l'étape de coloration de l'échantillon cytologique déposé sur la lamelle de microscope (24).

14. Procédé suivant les revendications 12 ou 13, qui comprend de plus l'étape de revêtement de la lamelle de microscope (24) avec une matière cationique de telle sorte que l'attraction ionique entre les cellules chargées négativement et la surface de la lamelle (24) chargée positivement fournit la face adhésive requise pour maintenir les cellules en place.
